(19) Europäisches Patentamt / European Patent Office / Office européen des brevets

(11) **EP 1 700 055 B1**

(12) **EUROPEAN PATENT SPECIFICATION**

(45) Date of publication and mention of the grant of the patent:
**19.03.2008 Bulletin 2008/12**

(21) Application number: **04808809.0**

(22) Date of filing: **21.12.2004**

(51) Int Cl.:
*F16H 55/56* (2006.01)

(86) International application number:
**PCT/NL2004/000893**

(87) International publication number:
**WO 2005/061930 (07.07.2005 Gazette 2005/27)**

(54) **CONTINUOUSLY VARIABLE TRANSMISSION**

STUFENLOS VERSTELLBARES GETRIEBE

BOITE DE VITESSES A VARIATION CONTINUE

(84) Designated Contracting States:
**AT BE BG CH CY CZ DE DK EE ES FI FR GB GR HU IE IS IT LI LT LU MC NL PL PT RO SE SI SK TR**

(30) Priority: **22.12.2003 NL 1025103**

(43) Date of publication of application:
**13.09.2006 Bulletin 2006/37**

(73) Proprietor: **ROBERT BOSCH GMBH**
**70442 Stuttgart (DE)**

(72) Inventors:
• **VAN DROGEN, Mark**
  **NL-5021 EJ Tilburg (NL)**
• **BRANDSMA, Arjen**
  **NL-5045 WN Tilburg (NL)**
• **HAAS, Volker**
  **71732 Tamm (DE)**

(74) Representative: **Plevier, Gabriel Anton Johan Maria**
**Van Doorne's Transmissie B.V.,**
**Patents Department,**
**Postbus 500**
**5000 AM Tilburg (NL)**

(56) References cited:
**EP-A- 1 304 501**      **DE-A- 10 222 973**
**DE-A- 19 542 726**      **DE-A- 19 730 400**

• **ALBERS, A. ET AL.: "Keramik als Friktionswerkstoff im CVT-Getriebe" VDI-BERICHTE, no. 1595, October 2001 (2001-10), pages 199-211, XP002291337 DÜSSELDORF**
• **ANONYMOUS: "DLC(Diamond-like Carbon)" INTERNET ARTICLE, [Online] 18 July 2001 (2001-07-18), XP002291338 Retrieved from the Internet: URL:http://www.sei.co.jp/RandD/itami/e-too l/wadaien.html> [retrieved on 2004-08-05]**
• **PATENT ABSTRACTS OF JAPAN vol. 010, no. 114 (M-473), 26 April 1986 (1986-04-26) -& JP 60 241560 A (USUI KOKUSAI SANGYO KK), 30 November 1985 (1985-11-30)**
• **PATENT ABSTRACTS OF JAPAN vol. 012, no. 160 (M-697), 14 May 1988 (1988-05-14) -& JP 62 278353 A (MITSUBOSHI BELTING LTD), 3 December 1987 (1987-12-03)**

**Description**

The present invention relates to a continuously variable transmission as described in the preamble of Claim 1. Transmissions of this type are generally known, for example from patent publication EP-A-1 167 829 in the name of the Applicant. The transmission is designed with a flexible transmission element formed from metal or at least metal parts, so that relatively high powers can be transmitted, at least powers which are higher than with the generally known, optionally reinforced plastic V belts.

Transmissions of this type which are based on a metal transmission element are eminently suitable and therefore also widely commercially available for use in the driving of automobiles. One design drawback of these transmissions, however, is the need for a virtually continuous supply of a stream of lubricant to the frictional contact between the transmission element and the pulley, used to cool or dissipate the frictional heat from the frictional contact. This arrangement requires a high-quality hydraulic system in the known transmission, which not only has a detrimental effect on the complexity thereof but also adversely affects the price and also the maintenance and operating costs.

The abovementioned drawback has meant that various parties have already searched for what is described as a "dry" transmission, i.e. a transmission in which the transmission element and the pulley come into direct frictional contact with one another, i.e. without any lubricant being supplied to this contact, or at least without a continuous stream of lubricant being supplied. One example of this is the transmission element marketed by BANDO provided with a continuous longitudinal or tensioning element, on which a more or less large number of transverse elements are clamped in place, which transverse elements are provided with a metal core around which a plastic sheathing is arranged. The main principles of this transmission are known, inter alia, from patent publication EP-A 1 304 501. The drawback of this dry transmission is the relatively limited power for which it is currently suitable. A further example of the dry transmission concept is provided by DE-A-102 22 973 which discloses all features of the preamble of claim 1, and which document teaches specific pairings of different materials in the said frictional contact with the aim of increasing friction therein in comparison with the more conventional lubricated all metal frictional contact. In particular it is proposed to combine a metal with a synthetic, a ceramic or a technical ceramic material. In commercial terms, the dry transmission is available in a scooter application for a torque of up to 65 Nm and in a number of designs for a small car with an engine torque of from 70 to 80 Nm. However, at least at the present time, the known dry transmission is unsuitable for use in cars from the medium and higher classes, for example with an engine torque of 125 Nm or above.

Therefore, it is an object of the present invention to provide a continuously variable transmission which is suitable for the transmission of a relatively high engine torque, at least a torque which is higher than that of the known dry transmission, without a continuous supply of a stream of lubricant being required. According to the discovery on which the invention is based, this is achieved by a transmission in accordance with the measures presented in Claim 1.

In the measures according to the invention, the transmission, or at least the pulley and/or the transmission element, is provided with a surface layer or coating of a sintered or vapour-deposited inorganic material or material composition. A transmission which complies with this characteristic is advantageously suitable for an uncooled transmission of a relatively high torque and/or driving power, i.e. without a continuous supply of a stream of lubricant to the frictional contact between the transmission element and the two pulleys, with an acceptable wearing rate of the pulley and the transmission element also being achieved. Furthermore, the invention is advantageous in that a normal or clamping force which is exerted on the transmission element per pulley and is required to permit a frictional force in the respective frictional contact can be lowered compared to the transmission which is known from EP-A 1 167 829 on account of the relatively high coefficient of friction in the said contact.

Unlike in the case of the design which is known from EP-A 1 304 501, in which the coating comprises a plastic sheathing or encapsulation of the metal core, according to the present invention this coating comprises a layer of inorganic material which is bonded to the base material below it adhesively and also, on a microscopic scale, mechanically, resulting in stronger bonding between them. Both the material of the coating according to the invention per se and the said bonding of the coating to the base material are in particular able to withstand the development of heat which occurs in the frictional contacts.

The present invention is surprising in the sense that in the measure according to the invention, from the groups of potential alternative materials which have been investigated, those materials which, on account of the relatively low coefficient of friction, require the highest clamping force and the highest associated contact pressure in the frictional contact appear to be suitable for the coating. Previously, these materials would in fact have been expected to have a relatively high wearing rate and/or be damaged by the development of heat. In other words, precisely those materials which would be expected to evolve the largest amount of heat, which is at least partly determined by the product of the clamping force and a (micro)slip rate in the frictional contact, have been found to have a disproportionately low wearing rate despite the fact that the abovementioned development of heat generally influences this wear.

The research carried out by the Applicant has also discovered that advantageously only one component of the inorganic coating in question has to be provided in the frictional contacts between the transmission element and the two pulleys, while the other component can be made entirely from the base material which is customary for this purpose, generally hardened steel. Therefore, in a first preferred embodiment of the invention, the coating consists of a sintered metallic friction material, as is known, for example, from dry disc clutches, and this material is applied on one side to the contact surfaces of the pulleys by which the latter come into frictional contact with the transmission element. The known manufacturing techniques for applying a coating of this type are suitable in particular for more or less flat and relatively large surfaces.

In a second preferred embodiment of the invention, the coating consists of a DLC or diamond-like carbon coating applied by vapour deposition to one side of the contact surfaces of the transmission element by means of which the latter comes into frictional contact with the pulleys. According to a more detailed refinement of this preferred embodiment, the transmission element is what is known as a push belt provided with at least one continuous ribbon-like metal tensioning element and with a more or less large number of relatively thin metal transverse elements which can move transversely with respect to the tensioning element and are arranged along the periphery thereof, with at least the contact surfaces of these transverse elements with the pulleys being provided with the DLC coating, which is much more suitable than the sintered coating for application to a product of relatively complex shape. Moreover, known manufacturing techniques comprise the application of a conversion layer of, for example, chromium in order to reinforce the bonding between the coating and the steel base material. It is preferable for the transverse elements to be completely coated, so that a contact surface thereof with the tensioning element is also provided with a protective, wear-resistant coating. If, as is generally the case, a number of radially nested tensioning elements are used in the push belt, it is advantageous for them to be provided with the DLC coating, since the tensioning elements, during operation, slide over one another in the longitudinal direction, generating frictional heat and producing wear, just as in the frictional contact between the transverse elements and the pulleys.

In one particular embodiment, the coating is formed from a material with a coefficient of friction Cof in contact with steel of less than or equal to 0.20, so that the existing contact angle, as it is known, $\alpha$ of 11 degrees can be maintained. At this value, at least with the variator rotating, in accordance with the formula known per se for a self-locking action - $\alpha \geq \arctan(Cof)$ - a transmission designed in accordance with the known dimensions, i.e. without the need to adapt the existing transmission design, is able to shift, i.e. the transmission element can be moved in the radial direction at the location of the pulleys. According to the research on which the present invention is based, at least the DLC coating with a coefficient of friction in contact with steel of approximately 0.15 is suitable for this purpose.

The invention will now be explained in more detail, by way of example, with reference to a drawing, in which:

Figure 1 diagrammatically depicts a cross section through a continuously variable transmission provided with two pulleys and a transmission element according to the prior art.

Figure 2 shows a simplified side view of the transmission from Figure 1.

Figure 3 shows a cross section through what is known as push belt, which can preferably be used as the transmission element in the continuously variable transmission according to the invention.

Figure 4 shows a graph indicating the coefficient of friction in a dry frictional contact between a steel and a wide range of different materials for the contact surface of the pulleys and/or the transmission element and also the contact pressure which is estimated to be required on this basis on a dry transmission.

Figure 5 illustrates a linear coefficient of wear for the combinations of materials from Figure 4.

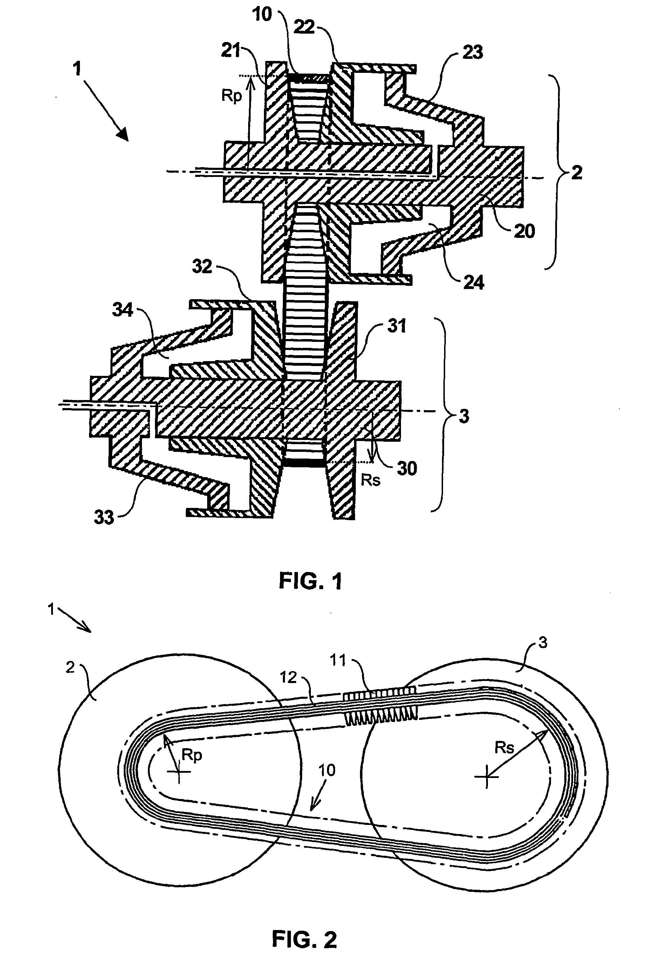

Figure 1 diagrammatically depicts a cross section through a continuously variable transmission 1 according to the prior art. The known transmission 1 comprises a primary pulley 2, which can be driven by an engine (not shown) with a primary couple of forces Tp and a secondary pulley 3 which can drive a load (not shown) with a secondary couple of forces Ts. Both pulleys 2 and 3 are provided with a pulley sheave 21, 31, which is fixedly secured to the respective pulley axle 20, 30, and with a sheave 22, 32 which can be displaced in the axial direction with respect to this axle 20, 30. A transmission element 10, more particularly a push belt 10, is clamped between the pulley sheaves 21, 22, 31, 32, so that mechanical power can be transmitted between the two axles 20 and 30 with the aid of friction. An axially oriented clamping force with which the transmission element 10 is clamped for each pulley 2, 3 is in this case realized by an activation unit. In this example, this activation unit is formed by respective pressure chambers 24, 34 of the two pulleys 2 and 3, in which a hydraulic pressure is applied, but alternatives for the activation unit are also known.

The transmission ratio Rs/Rp of the transmission 1 is determined by the ratio between a secondary running radius Rs and a primary running radius Rp of the transmission element 10, i.e. the effective radial position thereof between the sheaves 21, 22, 31 and 32 of the respective pulleys 2 and 3. The said running radii Rp and Rs and therefore the transmission ratio Rs/Rp, defined in accordance with the invention, of the transmission 1 can be varied, corresponding to the shifting of the transmission, by moving the displaceable sheaves 22, 32 in opposite axial directions over the respective pulley axles 20, 30. In Figure 1, the transmission 1 is illustrated as an example with a small transmission ratio Rs/Rp, i.e. with a relatively large primary running radius Rp and a relatively small secondary running radius Rs.

Figure 2 shows a further view, in this instance a side view, of the known transmission 1, with the primary pulley 2 and the primary axle 20 on the left-hand side of the figure and the secondary pulley 3 and the secondary axle 30 on the righthand side of the figure. Compared to Figure 1, this figure shows the transmission 1 with a relatively high transmission ratio Rs/Rp, in which the primary running radius Rp is lower than the secondary running radius Rs, with the result that, during operation, the primary pulley 2 will have a lower rotational speed than the secondary pulley 3. The transmission element 10 shown is in this case what is known as a push belt 10 which comprises a virtually continuous series of transverse elements 11, only some of which are shown for the sake of simplicity, and a continuous, relatively flexible tensioning element 12.

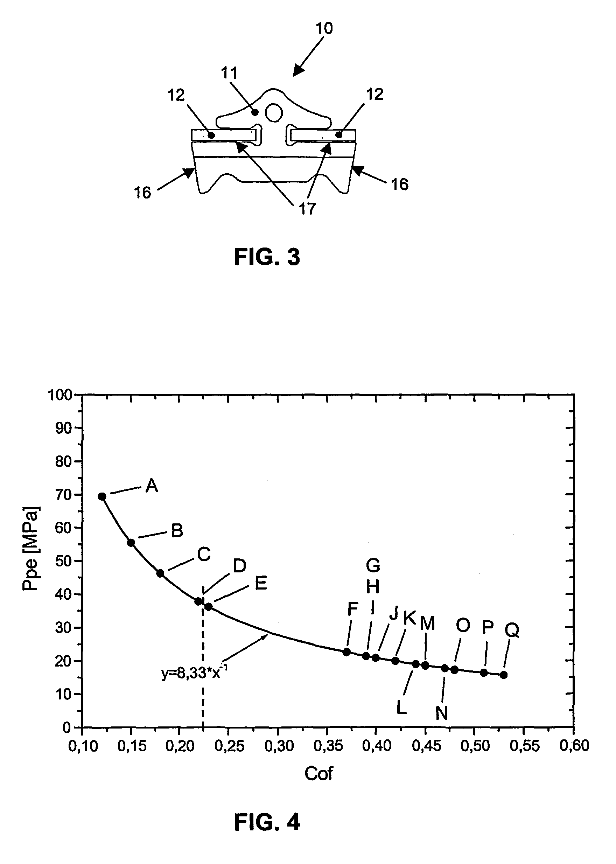

This push belt 10 is shown in more detail by means of a cross section in Figure 3. The cross section shows a front view of the transverse element 11, which is provided on either side with a recess, in each of which a separate tensioning element 12 is accommodated. The tensioning elements 12 and the transverse elements 11 in this case enclose one another in the radial or vertical direction, but the transverse elements 11 can move freely along the tensioning elements 12 in the peripheral direction thereof. Furthermore, the transverse elements 11 are provided with a protuberance in the peripheral direction of the push belt 10, i.e. projection 13, and with a recess 14 arranged in an opposite main side of the element 11, which projection 13 and recess 14 serve to orient the series of transverse elements 11 with respect to one another in the push belt 10.

A bottom section of the transverse element 11 tapers, so that two adjacent transverse elements 11 can tilt with respect to one another and the push belt 10 can describe an arc, for example where it is clamped between the sheaves 21, 22, 31, 32 of the respective pulleys 2 and 3. It should be noted that the abovementioned effective radial position, i.e. the effective running radius Rp, Rs of the push belt 10, substantially corresponds to a radial position of the top side of the bottom section of the transverse element 11, which top side is also referred to as the tilting line of the transverse elements 11 along which they are in contact with one another in the said arc. Furthermore, the bottom section is provided on both sides with what are known as contact surfaces 16, via which the transverse element 11 is clamped between the sheaves 21, 22; 31, 32, the rotation of a driving pulley 2 being transmitted via friction to the clamped transverse elements 11. In this case, a considerable pushing force can be produced between the transverse elements 11, with the result that they push one another along the tensioning elements 12 in the direction of the driven pulley 3. The tensioning elements 12 in this case bear against the transverse elements 11 via bearing surfaces 17 specifically designed for this purpose, also known as saddles. Then, where the push belt 10 is clamped between the sheaves 31 and 32 of the driven pulley 3, the pushing force which is present between the transverse elements 11 is virtually completely transmitted thereto via friction. Ultimately, the transverse elements 11 push one another, exerting a relatively low pushing force, back from the driven pulley 3 to the driving pulley 2. The tensioning elements 12 during this process ensure that the transverse elements 11 continue to follow the path intended for the push belt 10.

The coefficient of friction between the transverse elements 11 and the pulley sheaves 21, 22 and 31, 32 in the known transmissions is substantially determined by the type of a liquid lubricant and coolant used, known as ATF (Automatic Transmission Fluid). This lubricant is at least virtually continuously supplied, discharged and supplied again, i.e. recirculated, and is in part used to efficiently dissipate heat which results from the nature of the frictional transmission. As an example, 1% losses through the development of heat as a result of slip in the frictional contact, for a power of 100 kW to be transmitted, results in a heat output of 1 kW, which requires forced cooling of the frictional contact.

One drawback of this form of operation of the transmission 1 is that the coefficient of friction between the transverse elements 11 and the pulleys 2, 3 adopts a relatively low value of approximately 0.1. This in turn means that the clamping force required per pulley 2, 3 is very high, and consequently these pulleys have to be made very robust and have to be provided with a powerful activation unit. In addition, the transmission 1 has to be designed in such a way that an excess of lubricant can easily be discharged from the contact between a pulley 2, 3 and the contact surfaces 16 of a transverse element 11, for which purpose these contact surfaces 16 are generally provided with grooves or some other form of discontinuous surface. As a result, the effective surface area of the contact surfaces 16 which is available to absorb the clamping force is lower than the apparent geometric surface area thereof.

Therefore, these two aspects lead to a relatively high contact pressure Ppe in the frictional contact and are therefore at least partially the determining factor for the maximum power density, as it is known, which can be achieved in the known transmission 1, this power density being defined as the nominal power which can be transmitted divided by the volume or weight thereof. In general, an increase in the contact pressure Ppe also has an adverse effect on the efficiency of the transmission 1.

Since the commercially available designs of the dry transmission which is also known are only suitable for a relatively limited power, all this has given cause to reconsider the known designs and has ultimately led to far-reaching research into a design of a continuously variable transmission which can potentially be used to transmit a relatively high power without a continuous supply of a stream of lubricant.

A large number of alternative materials were researched for possible usability in an unlubricated frictional contact between the transmission element 10 and the pulleys 2, 3. An important starting point for the research was that the power density of the lubricated transmission 1 needs to be at least approximately retained, which is expressed, for example, in the desired minimum torque which can be transmitted being greater than that of the known dry transmissions with equal dimensions of the contact surfaces 16 of the transmission element 10, more particularly of the transverse

### EP 1 700 055 B1

elements 11 thereof.

The following materials and combinations of materials were involved in the research:

A = reference measurement with continuous supply of a stream of lubricant;
B = DLC-coating ("Diamond-like carbon") on steel;
C/D/E = various compositions of a sintered metallic coating (friction material as used for dry disc clutches) on steel;
I/K/M = technical-grade ceramic as a coating on steel:

I = alumina (Al2O3);
K & M = yttrium-stabilized zirconia;

F/G/H/J/L/N/O/P/Q = various steel grades (without coating!):

F = special wear-resistant steel;
G = ferro-titanium steel (33% TiC);
H = tool steel;
J = HSS steel;
L = CrMoV-steel (surface nitrided);
N = CrMoV-steel (surface carburized);
O = CrMoN-steel;
P = extruded ferro-silicon steel (25% SiC);
Q = cast ferro-silicon steel (20% SiC);

In all these cases, first of all the coefficient of friction Cof of the respective material or material combination A to Q in the frictional contact with steel was determined with the aid of the known, virtually standardized pin-disc test. In this test, the disc is arranged in rotation while the pin is pressed onto the rotating disc while a desired normal force or contact pressure between them is exerted. One of the two components, namely the pin or the disc, or at least the contact surface thereof, is in this case made from the respective material to be tested or the corresponding material combination A to Q, while the other component consists of steel, in this case 100Cr6 steel.

The coefficients of friction Cof measured with the aid of the abovementioned pin-disc test are shown in Figure 4 for the materials and material combinations A to Q. Then, with the aid of the coefficient of friction Cof, it is possible to calculate the contact pressure Ppe required to realize a defined, desired frictional force, the starting point for which calculation, as has been stated, was the level of the frictional force and the geometric, apparent surface area of the contact surfaces 16 as used in the current lubricated transmissions 1 employed. In this context, it should be noted that the geometric, apparent surface area of the contact surfaces 16 in the dry transmission is equal to the available, effective surface area thereof, which advantageously leads to a contact pressure Ppe which is lower, in some cases even lower by a factor of up to 4 or more, for a constant level of the desired frictional force. On account of the background which has been discussed in this context, this parameter is referred to as the equivalent contact pressure Ppe.

The equivalent contact pressure Ppe which is therefore required for the respective materials and material combinations A to Q is also illustrated in Figure 4. This equivalent contact pressure Ppe appears to roughly satisfy the following relationship:

$$\text{Ppe} \approx \frac{8.3}{\text{Cof}} \cdot [\text{MPa}] \qquad\qquad (1)$$

The materials and material combinations A to Q were then subjected to a linear wear test. In this type of test, the pin is pressed onto the disc, with the respective equivalent contact pressure Ppe from Figure 4 being exerted, for a defined time period or test duration and at a realistic differential or slip rate of - in the test described here - 0.2 m/s. Carrying out the measurements using a pin provided with a flat contact surface with the disc ensures that the contact pressure Ppe remains more or less constant throughout the test even in the event of wear to the pin.

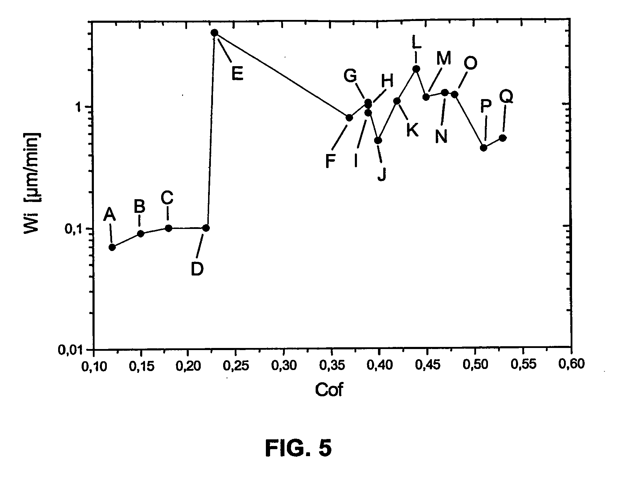

After the linear wear test has ended, the distance by which the pin has been ground down is measured (i.e. the difference in pin length before and after the test is determined), and what is known as a wearing rate Wi is calculated by dividing this distance by the test duration. The results of this calculation are plotted in Figure 5, in which, for each of the abovementioned materials and material combinations A to Q, the wearing rate Wi, represented in micrometres per minute, is plotted on a logarithmic scale along the Y axis against the coefficient of friction Cof along the X axis.

Figure 5 clearly reveals a division into two groups of materials, which differ by a factor of 10 in terms of their wearing rate Wi. It should be noted that the group of materials and material combinations with the highest wearing rate Wi, E to Q inclusive, according to the Applicant is unsuitable for use in a contact surface in the frictional contact between the pulleys (2, 3) and the transmission element (10) of the transmission 1. Such a high wearing rate Wi would lead to an unacceptably short service life of the transmission 1. The group of materials and material combinations having the lowest wearing rate Wi, namely B to D inclusive, according to the Applicant are at least in principle suitable for an application of this nature. According to the invention, therefore, the DLC coating and the sintered metallic coating are suitable, the latter at least in so far as the coefficient of friction Cof is lower than 0.225.

Of course, the service life of the transmission 1 can still be extended if, during its operation, a lower maximum contact pressure Ppe than the abovementioned equivalent contact pressure Ppe from equation (1) is used or if the equivalent contact pressure Ppe is only applied during part of the service life, in which case the mean contact pressure Ppe is lower.

It can also be seen from Figure 5 that for the latter group of materials and material combinations B to D, the highest equivalent contact pressure Ppe applies. Despite the fact that therefore this latter group did not beforehand appear the most likely to obtain an optimum efficiency for the transmission 1, this group has in fact proven suitable for realizing the objective on which the present invention is based, since this is offset by the fact that the associated wearing rate Wi is considerably lower than that of the other materials and material combinations B to D.

With the said materials, the coefficient of friction Cof is at least virtually doubled compared to the known, lubricated transmission, while the minimum contact pressure required has dropped considerably. On account of such a design of the transmission according to the invention, the amount of heat which has to be dissipated has greatly decreased, and therefore the transmission can be viably designed without cooling in the form of a continuous supply of recirculating lubricant while at the same time also realizing only a relatively limited and therefore acceptable level of wear.

It should be noted that, at least if it is desired or deemed necessary, lubricant can still be supplied to the said frictional contact, for example a highly viscous lubricating grease on a one-off basis during manufacture of the transmission 1 or from time to time during operation, for example dropwise or as a spray, in particular without recirculation thereof. Although these forms of lubrication do not lead to particularly efficient or extensive cooling, which in any case is not necessary in the transmission 1 according to the invention, this does generally - further - reduce the wearing rate Wi and/or, in particular when using the push belt 10, reduces the development of heat between the transverse elements 11 and the tensioning element 12 thereof.

## Claims

1. Continuously variable transmission (1) having a pair of pulleys (2, 3), between which an endless transmission element (10), which is flexible in the longitudinal direction, is rotatably arranged, which pulleys (2, 3) and which transmission element (10) are at least largely made from metal in which transmission (1) at least one of the contact surfaces in a frictional contact between the pulleys (2, 3) and the transmission element (10) is provided with an inorganic surface layer or coating, **characterized in that** said frictional contact takes place without a continuous stream of a liquid lubricant being provided to it and **in that** a maximum contact pressure Ppe which occurs between a pulley (2, 3) and the transmission element (10) during operation is lower than 60 MPa and satisfies the following relationship:

$$Ppe \leq \frac{8.3}{Cof} \ \text{MPa}.$$

   wherein Cof represents the coefficient of friction in the said frictional contact.

2. Transmission (1) according to claim 1, **characterized in that** the coefficient of friction (Cof) is less than or equal to 0.2.

3. Transmission (1) according to claim 1 or 2, **characterized in that** the coefficient of friction (Cof) is equal to or higher than 0.15.

4. Transmission (1) according to one or more of the preceding claims, **characterized in that** all the contact surfaces in the frictional contact are provided with the coating.

5. Transmission (1) according to one or more of the preceding claims, **characterized in that** the surface layer is either of the DLC (Diamond-Like-Carbon) type or of the sintered metallic friction material type having a coefficient of friction (Cof) in frictional contact with steel that is lower than 0.225.

6. Transmission (1) according to Claim 5, **characterized in that** the contact surface of the pulleys (2, 3) is provided with a surface layer of sintered metallic friction material.

7. Transmission (1) according to Claim 5, **characterized in that** the contact surface (16) of the transmission element (10) is provided with a surface layer of DLC.

8. Transmission (1) according to one or more of the preceding claims, **characterized in that** the transmission element (10) is what is known as a push belt, which comprises at least one continuous ribbon-like metal tensioning element (12) and a more or less large number of relatively thin metal transverse elements (11) which can move transversely with respect to the tensioning element (12) and are arranged along the periphery thereof.

9. Transmission (1) according to the preceding claim, **characterized in that** the tensioning element (12), or at least that part of it which comes into contact with a bearing surface (17) of a transverse element (11), is provided with a surface layer of DLC.

10. Transmission (1) according to Claim 8 or 9, **characterized in that** the transverse elements (11), or at least the contact surfaces (16) thereof, are provided with a surface layer of DLC.

11. Transmission (1) according to Claim 8 or 9, **characterized in that** the transverse elements (11), or at least the contact surfaces (16) thereof, are provided with a surface layer of sintered metallic friction material.

12. Transmission (1) according to one or more of the preceding claims, **characterized in that** the said frictional contact is wetted or at least greased with lubricant.

13. Transmission (1) according to one or more of the preceding claims, **characterized in that** it is provided with application means intended to apply lubricant to the said frictional contact in an incidental, for example dropwise, manner.

14. Transmission (1) according to Claim 12 or 13, **characterized in that** the lubricant is not recirculated.

**Patentansprüche**

1. Stufenlos verstellbares Getriebe (1) mit einem Paar Riemenscheiben (2, 3), zwischen denen ein in der Längsrichtung flexibles Endlos-Kraftübertragungselement (10) drehbar angeordnet ist, wobei die Riemenscheiben (2, 3) und das Kraftübertragungselement (10) mindestens zum größten Teil aus Metall bestehen, wobei in dem Getriebe (1) mindestens eine der Kontaktflächen, die in einem Reibungskontakt zwischen den Riemenscheiben (2, 3) und dem Kraftübertragungselement (10) stehen, mit einer anorganischen Oberflächenschicht oder -beschichtung versehen ist, **dadurch gekennzeichnet, dass** der Reibungskontakt stattfindet, ohne dass ein kontinuierlicher Strom eines flüssigen Schmiermittels dorthin geleitet wird, und dass ein maximaler Kontaktdruck Ppe, der zwischen einer Riemenscheibe (2, 3) und dem Kraftübertragungselement (10) während des Betriebes anliegt, niedriger als 60 MPa ist und die folgende Beziehung erfüllt:

$$Ppe \leq \frac{8,3}{Cof} \; MPa$$

wobei Cof den Reibungskoeffizienten in dem Reibungskontakt darstellt.

2. Getriebe (1) nach Anspruch 1, **dadurch gekennzeichnet, dass** der Reibungskoeffizient (Cof) maximal 0,2 beträgt.

3. Getriebe (1) nach Anspruch 1 oder 2, **dadurch gekennzeichnet, dass** der Reibungskoeffizient (Cof) mindestens 0,15 beträgt.

**4.** Getriebe (1) nach einem oder mehreren der vorangehenden Ansprüche, **dadurch gekennzeichnet, dass** alle Kontaktflächen in dem Reibungskontakt mit der Beschichtung versehen sind.

**5.** Getriebe (1) nach einem oder mehreren der vorangehenden Ansprüche, **dadurch gekennzeichnet, dass** die Oberflächenschicht entweder vom DLC (diamantartigen Kohlenstoff)-Typ oder vom gesinterten metallischen Reibmaterial-Typ mit einem Reibungskoeffizienten (Cof) in Reibungskontakt mit Stahl, der kleiner als 0,225 ist, ist.

**6.** Getriebe (1) nach Anspruch 5, **dadurch gekennzeichnet, dass** die Kontaktfläche der Riemenscheiben (2, 3) mit einer Oberflächenschicht aus gesintertem metallischem Reibmaterial versehen ist.

**7.** Getriebe (1) nach Anspruch 5, **dadurch gekennzeichnet, dass** die Kontaktfläche (16) des Kraftübertragungselements (10) mit einer Oberflächenschicht aus DLC versehen ist.

**8.** Getriebe (1) nach einem oder mehreren der vorangehenden Ansprüche, **dadurch gekennzeichnet, dass** das Kraftübertragungselement (10) ein sogenanntes Schubband ist, das mindestens ein durchgängiges bandartiges Metallspannelement (12) und eine mehr oder weniger große Anzahl relativ dünner metallischer Querelemente (11) aufweist, die sich quer relativ zu dem Spannelement (12) bewegen können und entlang seines Umfangsrandes angeordnet sind.

**9.** Getriebe (1) nach dem vorangehenden Anspruch, **dadurch gekennzeichnet, dass** das Spannelement (12) oder wenigstens der Teil des Spannelements (12), der mit einer Lagerfläche (17) eines Querelements (11) in Kontakt kommt, mit einer Oberflächenschicht aus DLC versehen ist.

**10.** Getriebe (1) nach Anspruch 8 oder 9, **dadurch gekennzeichnet, dass** die Querelemente (11) oder wenigstens deren Kontaktflächen (16) mit einer Oberflächenschicht aus DLC versehen sind.

**11.** Getriebe (1) nach Anspruch 8 oder 9, **dadurch gekennzeichnet, dass** die Querelemente (11) oder wenigstens deren Kontaktflächen (16) mit einer Oberflächenschicht aus gesintertem metallischem Reibmaterial versehen sind.

**12.** Getriebe (1) nach einem oder mehreren der vorangehenden Ansprüche, **dadurch gekennzeichnet, dass** der Reibungskontakt mit Schmiermittel benetzt oder wenigstens geschmiert ist.

**13.** Getriebe (1) nach einem oder mehreren der vorangehenden Ansprüche, **dadurch gekennzeichnet, dass** es mit Auftragsmitteln ausgestattet ist, die dazu dienen, Schmiermittel nach dem Zufallsprinzip, zum Beispiel tropfenweise, auf den Reibungskontakt aufzutragen.

**14.** Getriebe (1) nach Anspruch 12 oder 13, **dadurch gekennzeichnet, dass** das Schmiermittel nicht in einen Kreislauf zurückgeführt wird.

**Revendications**

**1.** Boite de vitesses à variation continue (1) comprenant une paire de poulies (2, 3), entre lesquelles un élément de transmission sans fin (10), qui est flexible dans la direction longitudinale, est agencé de façon tournante, lesquelles poulies (2, 3) et lequel élément de transmission (10) sont du moins en grande partie fabriqué(e)s en métal, dans laquelle boîte de vitesses (1) au moins une des surfaces de contact en contact frictionnel entre les poulies (2, 3) et l'élément de transmission (10) est pourvue d'une couche ou d'un revêtement superficiel(le) inorganique, **caractérisée en ce que** ledit contact frictionnel se produit sans qu'une circulation continuelle de lubrifiant liquide ne soit fournie à celui-ci et **en ce que** la pression maximum de contact Ppe qui se produit entre une poulie (2, 3) et l'élément de transmission (10) durant le fonctionnement est inférieure à 60 MPa et satisfait la relation suivante :

$$Ppe \leq \frac{8,3}{Cof} \, Mpa$$

où Cof est le coefficient de friction dans ledit contact frictionnel.

**2.** Boite de vitesses (1) selon la revendication 1, **caractérisée en ce que** le coefficient de friction (Cof) est inférieur ou égal à 0,2.

**3.** Boite de vitesses (1) selon la revendication 1 ou 2, **caractérisée en ce que** le coefficient de friction (Cof) est égal ou supérieur à 0,15.

**4.** Boite de vitesses (1) selon une ou plusieurs des revendications précédentes, **caractérisée en ce que** toutes les surfaces de contact dans la zone de contact frictionnel sont pourvues du revêtement.

**5.** Boite de vitesses (1) selon une ou plusieurs des revendications précédentes, **caractérisée en ce que** la couche superficielle est soit du type carbone amorphe (Diamond-Like-Carbon DLC), soit du type matériau de friction en métal fritté, ayant un coefficient de friction (Cof) lors du contact frictionnel avec l'acier qui est inférieur à 0,225.

**6.** Boite de vitesses (1) selon la revendication 5, **caractérisée en ce que** la surface de contact des poulies (2, 3) est pourvue d'une couche superficielle de matériau de friction en métal fritté.

**7.** Boite de vitesses (1) selon la revendication 5, **caractérisée en ce que** la surface de contact (16) de l'élément de transmission (10) est pourvue d'une couche superficielle de carbone amorphe (DLC).

**8.** Boite de vitesses (1) selon une ou plusieurs des revendications précédentes, **caractérisée en ce que** l'élément de transmission (10) est un élément connu en tant que courroie de poussée, qui comprend au moins un élément tendeur en métal du genre ruban continu (12) et un nombre plus ou moins grand d'éléments transversaux en métal relativement minces (11) qui peuvent se déplacer transversalement par rapport à l'élément tendeur (12) et qui sont agencés autour de la périphérie de celui-ci.

**9.** Boite de vitesses (1) selon la revendication précédente, **caractérisée en ce que** l'élément tendeur (12), ou du moins la partie de celui-ci qui vient en contact contre une surface de portée (17) d'un élément transversal (11), est pourvue d'une couche superficielle de carbone amorphe (DLC).

**10.** Boite de vitesses (1) selon la revendication 8 ou 9, **caractérisée en ce que** les éléments transversaux (11), ou du moins les surfaces de contact (16) de ceux-ci, sont pourvu(e)s d'une couche superficielle de carbone amorphe (DLC).

**11.** Boite de vitesses (1) selon la revendication 8 ou 9, **caractérisée en ce que** les éléments transversaux (11), ou du moins les surfaces de contact (16) de ceux-ci, sont pourvu(e)s d'une couche superficielle de matériau de friction en métal fritté.

**12.** Boite de vitesses (1) selon une ou plusieurs des revendications précédentes, **caractérisée en ce que** ledit contact frictionnel est mouillé ou du moins graissé avec du lubrifiant.

**13.** Boite de vitesses (1) selon une ou plusieurs des revendications précédentes, **caractérisée en ce qu'**elle est pourvue d'un moyen d'application destiné à appliquer du lubrifiant audit contact frictionnel de façon incidentelle, par exemple goutte à goutte.

**14.** Boite de vitesses (1) selon la revendication 12 ou 13, **caractérisée en ce que** le lubrifiant n'est pas recirculé.

**FIG. 1**

**FIG. 2**

**FIG. 3**

$y = 8,33 \cdot x^{-1}$

**FIG. 4**

**FIG. 5**

**EP 1 700 055 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1167829 A
- EP 1304501 A

- DE 10222973 A